# EUROPEAN PATENT SPECIFICATION

(11) **EP 2 076 062 B1**
(45) Date of publication and mention of the grant of the patent: **17.01.2018**
(21) Application number: 07829783.5
(22) Date of filing: 15.10.2007
(51) Int. Cl.: H04R 17/00, G01S 15/93

(54) **ULTRASONIC SENSOR**
ULTRASCHALLSENSOR
CAPTEUR ULTRASONORE

(30) Priority: 20.10.2006 JP 2006285700
(43) Date of publication of application: 01.07.2009
(73) Proprietor: Murata Manufacturing Co. Ltd., Nagaokakyo-shi, Kyoto 617-8555 (JP)
(72) Inventor: MURATA, Koji, Nagaokakyo-shi Kyoto 6178555 (JP); KOTANI, Masato, Nagaokakyo-shi Kyoto 6178555 (JP); ASADA, Takaaki, Nagaokakyo-shi Kyoto 6178555 (JP); SHIMAMOTO, Takayuki, Nagaokakyo-shi Kyoto 6178555 (JP); HIRANO, Hiroyuki, Nagaokakyo-shi Kyoto 6178555 (JP); FURUYA, Mio, Nagaokakyo-shi Kyoto 6178555 (JP)
(74) Representative: Lloyd, Patrick Alexander Desmond
(86) International application number: PCT/JP2007/070049
(87) International publication number: WO 2008/047743

(56) References cited:
- EP-A2- 0 930 607
- DE-A1- 10 341 900
- JP-A- H0 236 700
- JP-A- H11 266 498
- JP-A- 2002 058 097
- JP-U- 59 076 196
- JP-U- 63 085 998
- US-A- 4 556 814
- US-A1- 2003 121 331
- US-A1- 2006 158 066

## Description

### Technical Field

The present invention relates to ultrasonic sensors, and relates to ultrasonic sensors used as, for example, obstacle detection sensors such as car-mounted rear sonar devices and corner sensors.

### Background Art

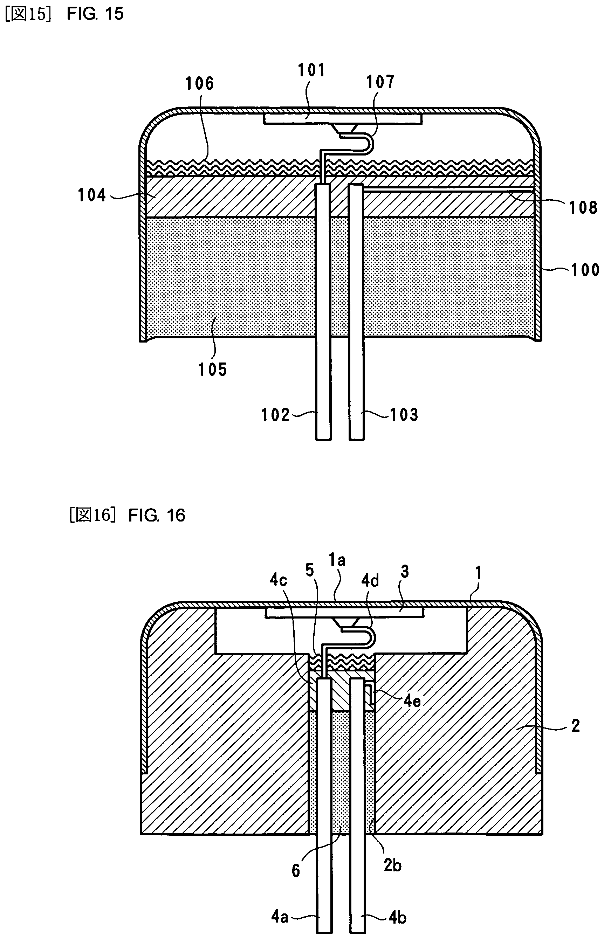

Ultrasonic sensors capable of transmitting and receiving ultrasonic waves have been used as obstacle detection sensors such as car-mounted rear sonar devices. As shown in Fig. 15, such an ultrasonic sensor includes a cylindrical case 100 with a bottom and a piezoelectric element 101 bonded to the inner side of the bottom portion such that the bottom portion of the case 100 functions as a vibrating surface. A terminal holder 104 that holds metallic terminals 102 and 103 is fixed inside the case 100, and a viscoelastic filler 105 is disposed in a recessed portion formed by the terminal holder 104 and the sidewall of the case 100. A sound absorber 106 is disposed at the inner side (adjacent to the piezoelectric element) of the terminal holder 104. Spring terminals 107 and 108 are attached to the metallic terminals 102 and 103, respectively. The spring terminal 107 is in contact with an electrode on the rear surface of the piezoelectric element 101, and the spring terminal 107 is in contact with the inner surface of the case 100. When a voltage is applied to the piezoelectric element 101, the piezoelectric element 101 is induced to vibrate in radial directions or in the thickness direction thereof, and the vibrating surface of the case 100 vibrates so as to emit ultrasonic waves into the air. Once the case 100 resonates, the vibration continues to some extent even when electrical signals to the piezoelectric element 101 are cut off. This phenomenon is referred to as reverberation. When the reverberation continues for a long time, sound waves reflected from target objects cannot be detected since the sound waves are hidden in the reverberation signals, and the resolution of minimum distances to detected obstacles cannot be improved.

To reduce the reverberation, Patent Document 1 describes a method for reducing variations in reverberation characteristics by setting the hardness of sealing silicone resin disposed inside a case in a predetermined range. However, the physical properties of such a hardened body of silicone resin widely vary, and it is difficult to reduce variations among manufactured products. Therefore, it is very difficult to control the manufacturing process, and the reverberation characteristics may in fact be impaired and the characteristics may vary more widely when the manufacturing process is not well-controlled.

Patent Document 2 discloses an ultrasonic sensor that reduces residual vibration by placing a vibration isolator on a piezoelectric element and the entire inner surface of a cylindrical case and by placing an elastic member inside the cylindrical case so as to prevent resonance of the air inside the case. In this structure, a terminal plate is fixed to an opening of the cylindrical case, and the case and the terminal plate vibrate in an integrated manner. Thus, the vibration of the side surface of the case cannot be sufficiently reduced, and the reverberation cannot be sufficiently reduced.

Patent Document 3 discloses an ultrasonic sensor including a cylindrical case with a bottom, the sidewall portion of the case having a double structure including an inner peripheral wall and an outer peripheral wall, and an elastic body enclosed in a hollow portion formed between the inner peripheral wall and the outer peripheral wall. This ultrasonic sensor has an effect of preventing vibration of the sidewall portion of the case causing reverberation from being amplified by reducing mutual interference between the vibration of a bumper of a vehicle body and the vibration of the sidewall portion of the case causing reverberation using a damping effect of the elastic body enclosed in the hollow portion of the sidewall portion of the case. However, the ultrasonic sensor cannot effectively reduce the vibration transmitted to the sidewall portion of the case and causing reverberation itself.
Patent Document 1: Japanese Unexamined Patent Application Publication No. 2004-146879
Patent Document 2: Japanese Unexamined Patent Application Publication No. 2-36700
Patent Document 3: Japanese Unexamined Patent Application Publication No. 2004-343660

In addition, cited prior art document D1(US2003/121331 A1) discloses an inner housing having a bottom portion and a tubular side wall which provide a tubular cavity. An outer housing has a second tubular side wall arranged around the outer peripheral portion of the first tubular side wall with a predetermined gap in between. A first absorption member is inserted in the gap between the first tubular side wall and the second tubular side wall.

D2 (US2006/158066 A1) discloses an ultrasonic sensor including an inner case having the shape of a cylinder with a bottom portion. A conductive film is attached to the bottom portion and an electrode formed at a surface of the piezoelectric vibrator is attached to the conductive film. By connecting leads with the conductive film and another electrode at the other side of the piezoelectric vibrator, the electric conduction between an external circuit and both electrodes at both surfaces of the piezoelectric vibrator is ensured.

D3 (JP 2002 058097 A) discloses a piezoelectric element disposed on the inner face side of the closing face of a case body having an open end face and a closed end face. An ultrasonic wave generated from the closed face has anisotropic directivity characteristic. The inside of the case body is sealed with resin.

D4 (DE 103 41 900 A1) discloses an ultrasonic sensor, in which a piezoelectric element is joined to an inner face of a bottom of a cylindrical case. A base made of foamed silicone is formed at an inner side of the opening of the case. One end of pin terminals is buried and fixed at the base while the other end of the pin terminals is provided on the outer side of the case. as an input/output unit of a signal. The whole of the base is covered with silicone rubber and fixed to the case. An acoustic material is formed between the silicone rubber and the bottom of the case, and the piezoelectric element is covered by the acoustic material.

The present invention aims to address the problems discussed above. The present invention provides an ultrasonic sensor having a cylindrical case with a bottom and a piezoelectric element fixed to the inner side of the bottom portion, the bottom portion constituting a vibrating surface, including a ring-shaped inner supporter disposed inside the sidewall portion of the case, having a central hole extending in the axial direction at the central portion of the supporter, and having a flat portion around the central hole; a viscoelastic filler disposed inside the central hole and on the flat portion of the inner supporter; a tabular member having a rigidity higher than that of the filler and disposed on the flat portion of the inner supporter so as to face the flat portion with the filler interposed therebetween; and a through-hole corresponding to the central hole of the inner support, the through-hole portion around the central hole; a viscoelastic filler disposed inside the central hole and on the flat portion of the inner supporter; and a tabular member having a rigidity higher than that of the filler and disposed on the flat portion of the inner supporter so as to face the flat portion with the filler interposed therebetween.

In order to efficiently perform mechanical damping of vibrational energy remaining inside the case as reverberation, it is necessary to promote dissipation of the vibrational energy. Dissipation of energy can be roughly classified into two, that is, material damping in which the energy is dissipated inside a structure and converted into thermal energy and viscosity damping in which the vibrational energy escapes to the exterior through intermediate substances by, for example, friction generated between joints of structural components. Material damping has been widely used for existing structures, and can exhibit an effect by selecting a filler having, for example, a high damping performance. However, no effective technique has been employed for viscosity damping. Viscosity damping is a method for efficiently dissipating energy by generating moderate shear deformation and shear force. According to the present invention, vibration that causes reverberation can be damped by the viscoelastic damping effect of the viscoelastic filler.

The shear deformation of the filler will now be described in more detail. The vibration of the piezoelectric element is transmitted to the case, and the case vibrates in response to the reverberation. With this, the inner supporter provided for the sidewall portion of the case also vibrates collaterally. Broadly speaking, the inner supporter vibrates in the axial direction and in radial directions thereof, and vibrations in these directions are generated while acting on each other. Herein, the vibration in the axial direction can be damped to some extent by the vibration reducing effect of the inner supporter itself and the material damping of the filler disposed in the central hole and on the flat portion of the inner supporter. However, the vibration in the radial directions cannot be sufficiently removed by the inner supporter itself or the filler disposed in the central hole. According to the present invention, the tabular member is disposed on the flat portion of the inner supporter so as to face the flat portion with the filler interposed therebetween, and the deformation of the tabular member in the radial directions is small compared with that of the flat portion when the inner supporter vibrates in the radial directions. Therefore, relative displacement occurs between the vibrating flat portion and the substantially still tabular member, and shear deformation occurs in the filler disposed therebetween. The vibrational energy can be efficiently dissipated by the viscoelastic damping effect caused by the shear deformation of the filler, and the vibration that causes reverberation can be reduced. Although the inner supporter can vibrate in directions other than the axial direction and the radial directions, the viscoelastic damping effect caused by the shear deformation of the filler can operate on at least vibrational components in the radial directions of the vibration in the other directions.

In order to obtain the shear deformation effect, it is necessary for the tabular member to be composed of a material with a rigidity higher than that of the filler. When the rigidity is high, changes in dimensions caused by bending force or torsional force are small. Physical properties that indicate deformation difficulty include modulus of elasticity. The modulus of elasticity is a generic name for Young's modulus and modulus of rigidity, and a material with a high modulus of elasticity has a high rigidity in general. In order to generate shear deformation in the filler, the tabular member needs to be composed of a material with a rigidity higher than that of the filler since it is necessary to generate shear strain in the filler by configuring the tabular member so as to be deformed as little as possible in response to the deformation of the filler when the inner supporter vibrates. The tabular member is desirably a plate composed of a material with a high rigidity such as metal. The side shapes of the tabular member of the present invention are not specified as long as the tabular member has a surface facing the flat portion of the inner supporter. Moreover, the tabular member can be thin or thick in the axial direction thereof. Furthermore, when a thin metallic plate such as a metallic washer is used as the tabular member, an increase in height of the ultrasonic sensor can be prevented.

Viscosity damping is affected by the shear modulus serving as parameters that determine shear characteristics of the filler and the thickness of a viscoelastic body. Moreover, the degree of shear deformation of the viscoelastic body is affected by the areas of the flat portion and the tabular member facing each other and the physical properties (for example, Young's modulus, modulus of rigidity, density, and resonant frequency), and also affected by modes of vibration (wavelengths). Therefore, in order to effectively reduce the vibration that causes reverberation, the type and the thickness of the viscoelastic body, the shapes of the flat portion and the tabular member, and the physical properties should be optimized in accordance with the frequencies and the amplitudes of the vibration. The use of viscosity damping in this manner can realize an ultrasonic sensor having the characteristics of an excellent damping function and mechanical damping function compared with a sensor whose reverberation characteristics only depend on the existing material damping caused by the viscoelastic body.

According to a preferred embodiment of the present invention, the flat portion is preferably a surface parallel to the bottom portion of the case. The flat portion is not necessarily parallel to the bottom portion of the case. However, when the inner supporter vibrates in this case, the flat portion vibrates parallel to the surface, and shear strain can be generated in the filler disposed between the flat portion and the tabular member most effectively.

According to a preferred embodiment of the present invention, the case can be formed of a cylindrical outer case with a bottom and an inner case joined and fixed inside the outer case, and the inner supporter can be formed in the inner case. When the case is formed of separate outer and inner cases, the side vibration of the outer case can be damped more effectively. Moreover, the materials and the shapes of the case members can be selected in accordance with the corresponding requirements, and the case members can be produced at low cost.

According to a preferred embodiment of the present invention, when the case is formed of separate outer and inner cases, the inner case can be composed of a metallic material with a density higher than that of the outer case. The material with a high density refers to a material with a high acoustic impedance, and such a material does not vibrate easily. Thus, when the inner case is composed of a material with a high acoustic impedance, the leakage of the vibrational energy to the side surface of the outer case can be reduced, and the reverberation can be reduced. In addition, sound pressure of the ultrasonic waves to be emitted can be increased.

According to a preferred embodiment of the present invention, a recessed portion can be formed in an end of the inner supporter opposite to that adjacent to the piezoelectric element, the flat portion can be formed at the bottom surface of the recessed portion, and the tabular member can be accommodated in the recessed portion. Since the tabular member can be accommodated in the recessed portion of the inner supporter adjacent to the rear side in this case, the tabular member can be easily positioned, and does not protrude outside the case.

According to a preferred embodiment of the present invention, only the flat portion can be formed at the end of the inner supporter opposite to that adjacent to the piezoelectric element, and the shape of the outer periphery of the tabular member can be substantially the same as that of the inner supporter. Since the area of the tabular member and that of the flat portion facing the tabular member can be increased in this case, the shear deformation can act on the filler more effectively, and the vibration damping effect can be improved.

According to a preferred embodiment of the present invention, a through-hole corresponding to the central hole of the inner supporter can be formed in the central portion of the tabular member, and a connecting terminal connected to the piezoelectric element can extend to the exterior through the central hole of the inner supporter and the through-hole of the tabular member in a noncontact manner. Since the connecting terminal can extend to the exterior without being in contact with the inner supporter and the tabular member in this case, the vibration is prevented from being transmitted through the terminal, and the reverberation reducing effect can be improved. Herein, the connecting terminal can be a metallic terminal, or can be a lead wire.

According to a preferred embodiment of the present invention, the inner supporter can be integrated into the inner side of the sidewall portion of the case. Since the bottom portion serving as the vibrating surface and the sidewall portion are integrated together in this case, the case can be easily manufactured. Such a case can be manufactured by known methods, for example, casting (including die casting), cutting, and forging.

### Advantages of Preferred Embodiments of the Invention

According to the present invention, a ring-shaped inner supporter is disposed inside a sidewall portion of a cylindrical case with a bottom, and a viscoelastic filler is disposed in a central hole of the inner supporter. With this, the vibrational energy can be damped by the material damping caused by the viscoelastic body and the inner supporter. Moreover, since a tabular member is disposed on a flat portion formed in the inner supporter so as to face the flat portion with the filler interposed therebetween, the side vibration of the case can be damped by the viscoelastic damping caused by the shear deformation occurring in the filler interposed between the inner supporter and the tabular member. As a result, an ultrasonic sensor capable of effectively reducing the vibration remaining on the case and causing reverberation and having an excellent resolution of a minimum distance to a detected obstacle can be realized.

### Best Modes for Carrying Out the Invention

Preferred embodiments of the present invention will now be described with reference to examples.

### EXAMPLE 1

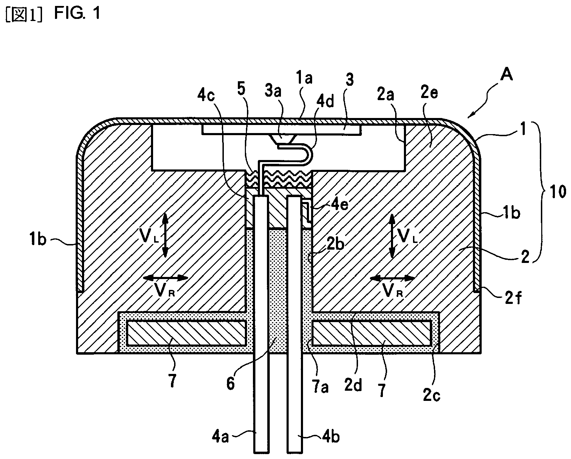

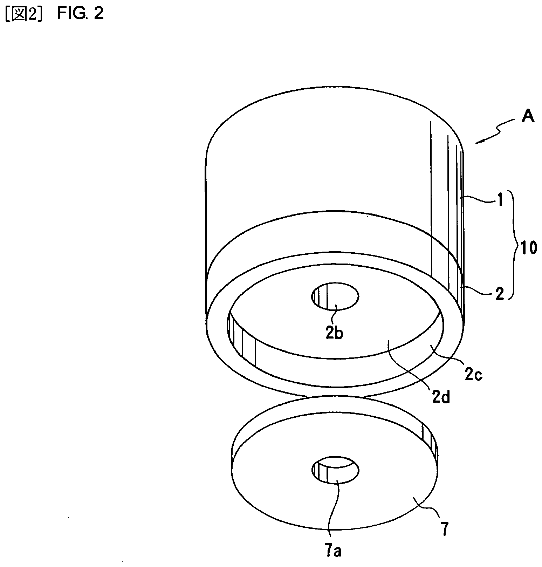

Figs. 1 and 2 illustrate an ultrasonic sensor of Example 1 according to an embodiment of the present invention. This ultrasonic sensor A includes an outer case 1, an inner case 2, a piezoelectric element 3, metallic terminals 4a and 4b, a sound wave absorber 5, a filler 6, and a tabular member 7.

The outer case 1 is formed by pressing a metal plate so as to have a cylindrical shape with a bottom (U-shaped when viewed in section), and the disc-shaped piezoelectric element 3 is bonded to the inner side of a bottom portion 1a of the outer case so as to constitute a unimorph cell. The piezoelectric element 3 includes a piezoelectric ceramic plate and electrodes formed on the top and bottom surfaces of the piezoelectric ceramic plate, and vibrates in radial directions or in the thickness direction thereof when a voltage is applied between the electrodes. The outer case 1 includes a cylindrical sidewall portion 1b with an opening at a position adjacent to the rear side. The outer case 1 is preferably composed of a material with a low acoustic impedance, that is, a metallic material that can vibrate easily. Electrodes (not shown) are formed on a first surface of the piezoelectric element 3, the first surface being in contact with the bottom portion 1a, and on a second surface that is opposite to the first surface.

The inner case 2 is joined and fixed inside the sidewall portion 1b of the outer case 1 having the opening, and the outer case 1 and the inner case 2 constitute a case 10. The inner case 2 constitutes an example of an inner supporter, and is composed of a metallic material so as to have an annular or cylindrical shape with a thickness larger than that of the outer case 1. The inner case 2 has, for example, a function of controlling directivity of ultrasonic waves emitted from the outer case 1 and a function of damping side vibration transmitted from the outer case 1. The inner case 2 is preferably composed of a metallic material with an acoustic impedance higher than that of the outer case 1, that is, a metallic material that does not vibrate easily. The inner case 2 includes a recessed portion 2a that forms a vibrating space in a central portion thereof adjacent to the front side facing the piezoelectric element 3, and a peripheral wall portion 2e of the recessed portion 2a is in close contact with the outer peripheral portion of the bottom portion 1a of the outer case 1. The shape and depth of the recessed portion 2a are set in accordance with the directivity of ultrasonic waves of the ultrasonic sensor A. The inner case 2 has a central hole 2b passing therethrough in the axial direction in the central portion thereof. In this example, the inner diameter of the central hole 2b is smaller than the outer diameter of the piezoelectric element 3. However, the inner diameter of the central hole can be larger than the outer diameter of the piezoelectric element 3. The inner case 2 has a recessed portion 2c surrounding the central hole 2b at an end of the inner case opposite to that adjacent to the piezoelectric element 3 (adjacent to the rear side), and a flat portion 2d is formed at the bottom surface of the recessed portion 2c. This flat portion 2d is parallel to the bottom portion 1a serving as a vibrating surface. The inner case 2 has a step 2f with a thickness corresponding to the thickness of the outer case 1 at the outer peripheral portion of the inner case, and the end of the opening of the outer case 1 is in contact with the step. In this example, the rear portion of the inner case 2 protrudes from the end of the opening of the outer case 1 to the exterior. However, the rear portion of the inner case 2 and the end of the opening of the outer case 1 can be in the same plane.

In order to reduce residual vibration of the sidewall portion 1b of the outer case 1, the inner case 2 that vibrates together with the sidewall portion, and conductive members and to reduce resonance of the air in the vicinity of the piezoelectric element 3, the sound wave absorber 5 such as a sponge is disposed at the end of the central hole 2b of the inner case 2 adjacent to the piezoelectric element. The sound wave absorber 5 in this example is accommodated inside the central hole 2b. However, the sound wave absorber can be accommodated in the vibrating space, that is, in the recessed portion 2a. A resin terminal holder 4c that holds the pair of metallic terminals 4a and 4b is fitted in the central hole 2b behind the sound wave absorber 5. The viscoelastic filler 6 is disposed in the central hole 2b behind the terminal holder 4c so as to seal the vibrating space. The filler 6 can be composed of a viscoelastic material such as silicone resin, urethane resin, and butyl rubber. The filler 6 is disposed so as to continuously extend from the central hole 2b to the recessed portion 2c.

A spring terminal 4d is disposed at an end of the metallic terminal 4a. The spring terminal 4d is in contact with and is electrically connected to a conductive portion 3a composed of, for example, solder or an electrically conductive adhesive formed on the electrode surface of the piezoelectric element 3 adjacent to the rear side. In this example, the vibration of the piezoelectric element 3 is not easily transmitted to the metallic terminal 4a since the spring terminal 4d is curved so as to form a U shape. The metallic terminal 4b is in contact with and is electrically connected to the inner surface of the central hole 2b of the inner case 2 via a spring terminal 4e. Since the inner case 2 and the outer case 1 are composed of conductive materials, the spring terminal 4e is electrically connected to the electrode on the surface of the piezoelectric element 3 adjacent to the front side via the inner case 2 and the outer case 1. Since the metallic terminals 4a and 4b are held by the filler 6 at the peripheries thereof, the vibration is prevented from leaking to the exterior via the metallic terminals 4a and 4b.

The tabular member 7 is accommodated in the recessed portion 2c of the inner case 2 adjacent to the rear side, and is embedded in the filler 6. That is, the entire tabular member 7 is covered with the filler 6. The flat portion 2d parallel to the bottom portion 1a serving as the vibrating surface is formed at the bottom surface of the recessed portion 2c as described above. The flat portion 2d and the tabular member 7 face parallel to each other, and the filler 6 is interposed therebetween. The tabular member 7 has a through-hole 7a at the central portion thereof, and the metallic terminals 4a and 4b extend to the exterior via the central hole 2b of the inner case 2 and the through-hole 7a of the tabular member 7 in a noncontact manner. The tabular member 7 is a plate composed of a material with a rigidity higher than at least that of the filler 6, and can be, for example, a metallic plate, a ceramic plate, or a rigid resin plate. Herein, a ring-shaped metallic washer is used.

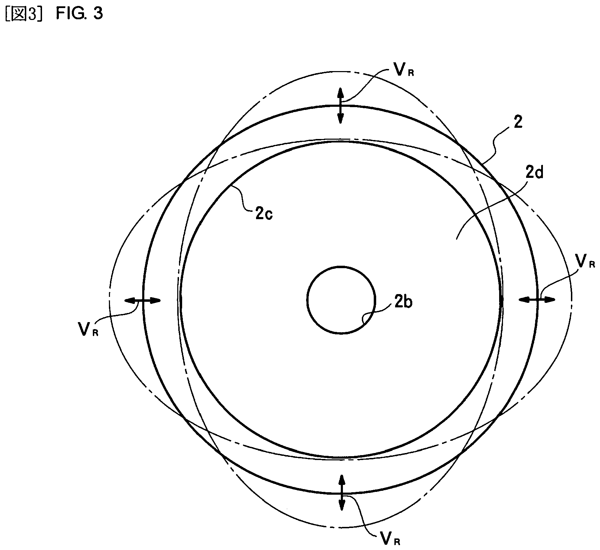

Next, the effect of vibration damping performed by the filler 6 and the tabular member 7 will be described. When a voltage is applied to the piezoelectric element 3, the piezoelectric element 3 is induced to vibrate in the radial directions or in the thickness direction thereof, and the bottom portion 1a of the outer case 1 serving as the vibrating surface vibrates so as to emit ultrasonic waves into the air. Once the outer case 1 resonates, the vibration continues to some extent even when electrical signals to the piezoelectric element 3 are cut off, and is transmitted to the inner case 2 via the sidewall portion 1b of the outer case 1. The vibration transmitted to the inner case 2 can be roughly classified into vibration V_{L} in the axial direction and vibration V_{R} in radial directions (see Fig. 1). The vibration V_{L} in the axial direction tends to be damped by the material damping effect of the viscoelastic filler 6 or the damping effect of the inner case 2. The vibration V_{R} in the radial directions can include a mode in which an ellipse when viewed as a whole is formed by inward deformation of the inner case 2 at two positions facing in a radial direction during outward deformation of the inner case at two other positions whose phases are shifted by 90° from those at the two above-described positions, the deformations occurring alternately, and a mode in which the entire inner case is expanded or contracted in the radial directions as shown in Fig. 3. On the other hand, the tabular member 7 disposed so as to face the flat portion 2d of the inner case 2 with the filler 6 interposed therebetween is deformed as little as possible in the radial directions. That is, since the tabular member 7 is not substantially deformed in response to the deformation of the inner case 2 in the radial directions as shown in Fig. 3, shear deformation occurs in the filler 6 interposed between the inner case 2 and the tabular member 7. As a result, the viscoelastic damping effect caused by the shear deformation occurring inside the filler 6 can effectively dissipate mainly the vibration V_{R} of the inner case 2 in the radial directions.

Since the tabular member 7 is held by the inner case 2 via the filler 6 in a noncontact manner, another effect that is different from that described above can be expected. That is, when the ultrasonic sensor A is installed in, for example, a car-mounted device, external vibration such as vibration of a vehicle body is transmitted to the ultrasonic sensor A. Such external vibration is damped by the filler 6 disposed in the inner case 2 to some extent. However, part of the vibration is transmitted to the piezoelectric element 3, and is detected as error signals in some cases. To solve this, the tabular member 7 is disposed in the inner case 2 via the filler 6 so as to be relatively deformable so that the inner case 2 that vibrates in accordance with the external vibration and the tabular member 7 do not vibrate in the same mode. With this, shear deformation occurs in the filler 6 disposed between the inner case and the tabular member, and the vibration can be damped by the viscoelastic damping effect. The effect of the shear deformation is enhanced as the acoustic impedance of the tabular member 7 is increased.

In order to efficiently generate energy loss by the viscoelasticity, it is desired that the tabular member 7 is deformed as little as possible while the inner case 2 is deformed in the radial directions as shown in Fig. 3, that is, the rigidity of the tabular member (washer) 7 is higher than that of the inner case 2. This is because shear deformation occurring in the filler 6 interposed between the inner case 2 and the tabular member 7 generates energy loss by the viscoelastic damping effect, and can efficiently dissipate the vibration V_{R} in the radial directions. When the rigidity of the tabular member 7 is lower than that of the inner case 2, the tabular member vibrates in accordance with the shear deformation of the filler 6, and the efficiency of dissipating unwanted vibrational energy becomes insufficient. Therefore, the rigidity of the tabular member 7 is desirably higher than that of the vibrating inner case 2.

Moreover, the size of the tabular member 7 is preferably larger than that of the piezoelectric element 3. In an ultrasonic sensor including a cylindrical case with a bottom and a piezoelectric element 3 disposed on the inner side of the bottom so as to constitute a vibrating surface, the piezoelectric element has an optimum size for attaining characteristics such as wave transmitting sensitivity and wave receiving sensitivity with consideration of the distribution of vibration on the vibrating surface and the electromechanical coupling coefficient when the vibrating surface to which the piezoelectric element is bonded is included. On the other hand, the strength and the frequency, for example, of vibration that causes reverberation vary in accordance with the designed dimensions and the material, for example, of the case, and the vibration is desirably dissipated as much as possible so that unwanted vibration is prevented. To this end, it is necessary to efficiently dissipate the mechanical energy between the tabular member disposed at the side opposite to that of the piezoelectric element and the filler. However, when the size of the tabular member is smaller than that of the piezoelectric element, a sufficient mechanical damping function cannot be achieved in some cases. Accordingly, the size of the tabular member 7 is desirably larger than that of the piezoelectric element 3.

The viscosity of the filler 6 before curing preferably ranges from 1 to 1,000 (Pa·s) A filler having a viscosity in this range can effectively exhibit the effect of damping mechanical energy in the viscous body since the propagation speed of transverse waves transmitted on the medium is low. A filler having too high a viscosity is not preferable due to the reduced filling work efficiency and the difficulty in handling. In contrast, a filler having too low a viscosity is not preferable since the damping effect is insufficient.

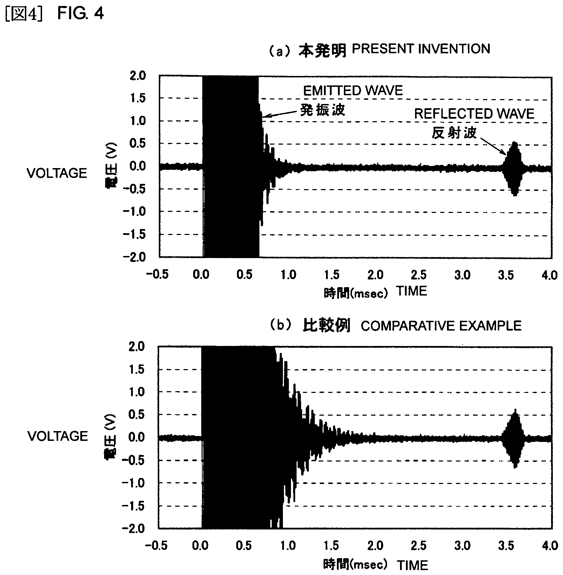

Fig. 4(a) illustrates the reverberation characteristic of the ultrasonic sensor A of Example 1 shown in Fig. 1, and Fig. 4(b) illustrates the reverberation characteristic of an ultrasonic sensor of Comparative Example shown in Fig. 16. In the drawings, the waveform of an emitted wave is shown at the left side, and the waveform of a wave reflected from an object is shown at the right side. The ultrasonic sensor of Comparative Example has the same structure as that of the ultrasonic sensor A shown in Fig. 1 except that the recessed portion 2c of the inner case 2 adjacent to the rear side and the tabular member 7 are omitted. Since the structure other than this is the same as that shown in Fig. 1, the same reference numbers are used for the same components, and the duplicated descriptions will be omitted. Herein, the diameter of the sensor was 15.5 mm, the height was 9 mm, the thickness of the tabular member 7 was 1.6 mm, and the diameter of the recessed portion 2c was 12 mm. Although the ultrasonic sensor of Comparative Example could also reduce the duration of the reverberation signal of the emitted wave to some extent by the damping effect of the thick inner case 2 as that of Example 1 could compared with the known ultrasonic sensor (see Fig. 15), as is clear from Figs. 4(a) and 4(b), the ultrasonic sensor A could further reduce the duration of the reverberation signal of the emitted wave by the effect of the filler 6 disposed between the inner case 2 and the tabular member 7 compared with that of Comparative Example, and could achieve an excellent result. From the results, the effectiveness of the viscoelastic damping effect caused by the shear deformation occurring in the filler has been confirmed.

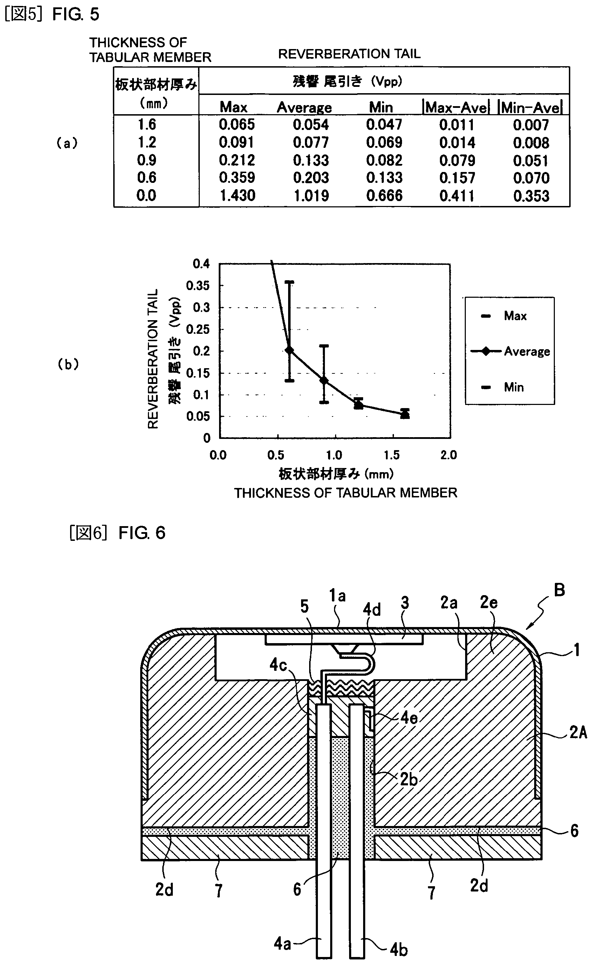

Figs. 5(a) and 5(b) illustrate the relationship between the thickness of the tabular member 7 and the reverberation tail. Herein, the diameter of the recessed portion 2c was 12 mm, and the thickness of the recessed portion 2c was 2.0 mm. The reverberation tail refers to a signal level (amplitude) of the waveform of reverberation persisting even after the input signal of an applied sensor driving voltage is cut off. Herein, the reverberation tail was evaluated from the maximum and minimum values of the signal level after a measurement time of 1.2 msec. The signal level is preferably as low as possible. When the ultrasonic sensor was not provided with the tabular member (thickness = 0 mm), the average of the reverberation tail reached a high value of 1.019 Vpp, and widely varied. In contrast, when the ultrasonic sensor was provided with the tabular member, the reverberation tail could be reduced, and could be further reduced as the thickness of the tabular member was increased. In particular, when the thickness of the tabular member exceeded 1.0 mm, the reverberation tail was reduced to 0.1 Vpp or lower, and the variations were small. In this manner, an excellent result could be achieved.

### EXAMPLE 2

Fig. 6 illustrates an ultrasonic sensor of Example 2 according to an embodiment of the present invention. In this ultrasonic sensor B, the entire rear surface of an inner case 2A serves as the flat portion 2d, and the tabular member 7 is disposed on the flat portion 2d so as to face the flat portion with the filler 6 interposed therebetween. The outer diameter of the tabular member 7 is substantially the same as that of the inner case 2A. The same reference numbers are used for components common to those in Example 1, and the duplicated descriptions will be omitted.

In this example, the areas of the inner case 2A and the tabular member 7 facing each other can be increased toward the outer peripheries thereof compared with those in Example 1. Therefore, shear deformation can act on the filler 6 more effectively. That is, since the deformation of the outer peripheral portion of the flat portion 2d of the inner case 2A is larger than that of the inner peripheral portion, the amount of shear deformation of the filler 6 located between the outer peripheral portion of the flat portion 2d and the outer peripheral portion of the tabular member 7 is large, and the viscoelastic damping effect can be more pronounced.

### EXAMPLE 3

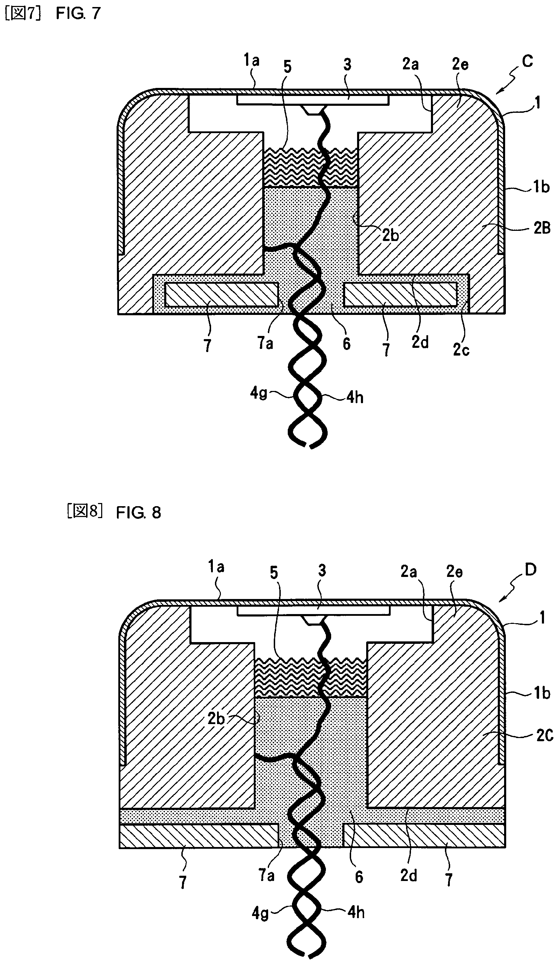

Fig. 7 illustrates an ultrasonic sensor of Example 3 according to an embodiment of the present invention. The same reference numbers are used for components common to those in Example 1, and the duplicated descriptions will be omitted. In an ultrasonic sensor C of this example, a lead wire 4g is connected to the rear surface of the piezoelectric element 3 bonded to the inner side of the bottom portion 1a of the outer case 1, and another lead wire 4h is connected to the inner surface of the central hole 2b of an inner case 2B. These lead wires 4g and 4h extend to the exterior via the central hole 2b and the through-hole 7a of the tabular member 7. Also in this example, the tabular member 7 is accommodated in the recessed portion 2c formed in the rear surface of the inner case 2B, and the filler 6 is interposed between the flat portion 2d serving as the bottom surface of the recessed portion 2c and the tabular member 7. When the inner case 2B vibrates, relative deformation occurs between the inner case and the tabular member 7, and causes shear deformation in the filler 6 interposed therebetween. In this manner, the viscoelastic damping effect can be obtained.

### EXAMPLE 4

Fig. 8 illustrates an ultrasonic sensor of Example 4 according to an embodiment of the present invention. The same reference numbers are used for components common to those in Example 3, and the duplicated descriptions will be omitted. This ultrasonic sensor D is a modification of the ultrasonic sensor C of Example 3. The entire rear surface of an inner case 2C serves as the flat portion 2d, and the tabular member 7 is disposed on the flat portion 2d so as to face the flat portion with the filler 6 interposed therebetween. The outer diameter of the tabular member 7 is substantially the same as that of the inner case 2C. In this example, the areas of the inner case 2C and the tabular member 7 facing each other can be increased as in Example 2. Therefore, shear deformation can act on the filler 6 more effectively.

### EXAMPLE 5

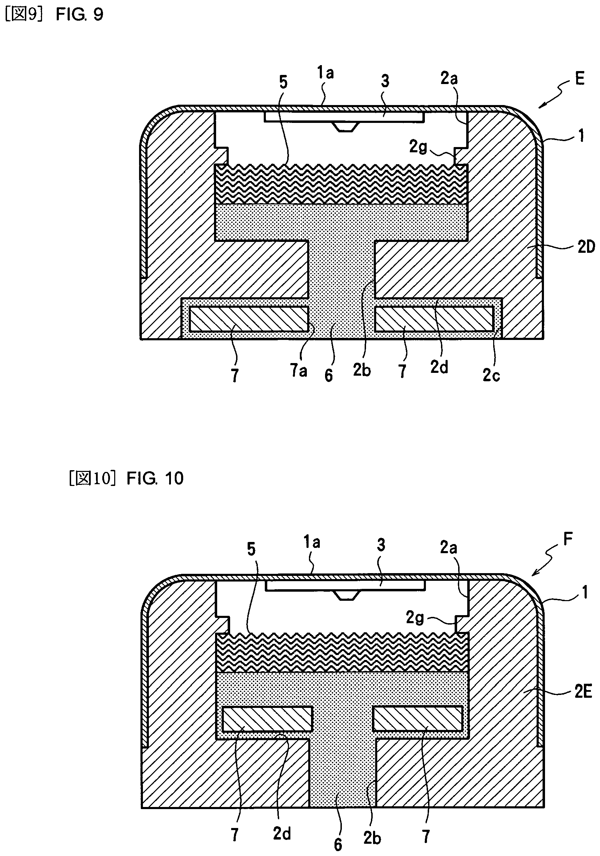

Fig. 9 illustrates an ultrasonic sensor of Example 5 according to an embodiment of the present invention. The same reference numbers are used for components common to those in Example 1, and the duplicated descriptions will be omitted. In an ultrasonic sensor E of this example, the recessed portion 2a of an inner case 2D adjacent to the front side is made deeper, the sound wave absorber 5 is disposed in the recessed portion, and part of the filler 6 is disposed in the recessed portion 2a. An inner circumferential projection 2g for positioning the front surface of the sound absorber 5 such that the sound absorber 5 is not brought into contact with the piezoelectric element 2 is formed on the inner surface of the recessed portion 2a. The recessed portion 2c is formed in the inner case 2D at a position adjacent to the rear side, and the tabular member 7 is disposed on the flat portion 2d serving as the bottom surface of the recessed portion 2c so as to face the flat portion with the filler 6 interposed therebetween. Although no connecting terminals for applying electrical signals to the piezoelectric element 3 and extracting output signals are illustrated in Fig. 9, metallic terminals shown in Examples 1 and 2 or lead wires shown in Examples 3 and 4 can be used as the connecting terminals.

### EXAMPLE 6

Fig. 10 illustrates an ultrasonic sensor of Example 6 according to an embodiment of the present invention. The same reference numbers are used for components common to those in Example 5, and the duplicated descriptions will be omitted. In an ultrasonic sensor F of this example, the recessed portion 2a of an inner case 2E adjacent to the front side (adjacent to the piezoelectric element) is made deeper, the sound wave absorber 5 is disposed in the recessed portion, and part of the filler 6 is disposed in the recessed portion 2a as in Example 5. The bottom surface of the recessed portion 2a serves as the flat portion 2d, and the tabular member 7 is disposed on the flat portion 2d so as to face the flat portion with the filler 6 interposed therebetween.

In this example, the flat portion 2d is formed in the inner case 2E at a position adjacent to the front side (adjacent to the piezoelectric element), and the tabular member 7 is disposed at a side of the flat portion 2d adjacent to the front side. That is, the tabular member 7 is completely accommodated in the case (outer case 1 and the inner case 2E), and is advantageously less susceptible to heat or outside air. Although no connecting terminals for applying electrical signals to the piezoelectric element 3 and extracting output signals are illustrated in Fig. 10, metallic terminals shown in Examples 1 and 2 or lead wires shown in Examples 3 and 4 can be used as the connecting terminals.

### EXAMPLE 7

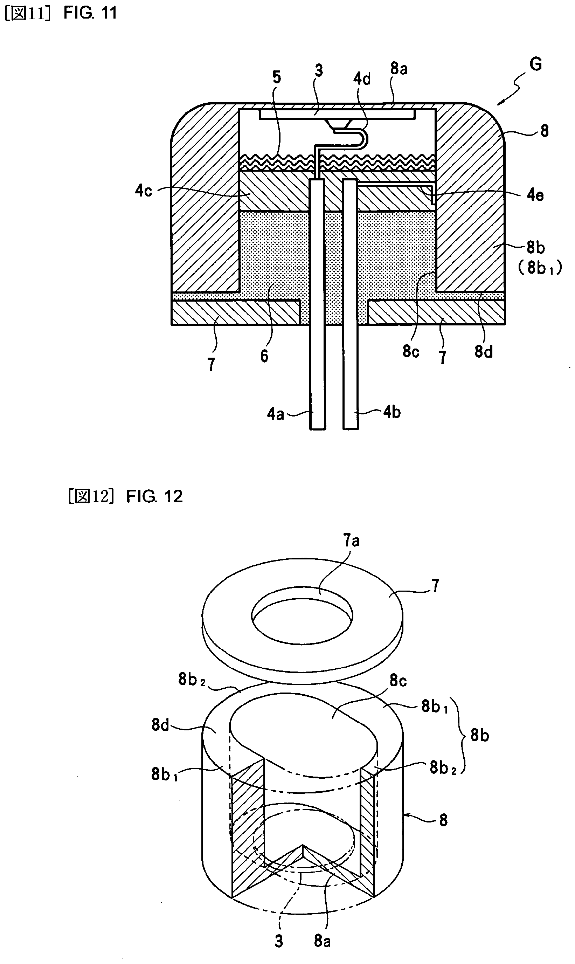

Figs. 11 to 13 illustrate an ultrasonic sensor of Example 7 according to an embodiment of the present invention. The same reference numbers are used for components common to those in Example 1, and the duplicated descriptions will be omitted. An ultrasonic sensor G in this embodiment includes a case 8 into which an outer case and an inner case composed of the same material are integrated. The front surface of the piezoelectric element 3 is bonded to the inner side of a bottom portion 8a of the case 8. The spring terminal 4d attached to an end of the metallic terminal 4a is connected to the rear surface of the piezoelectric element 3, and the spring terminal 4e of the metallic terminal 4b is connected to the inner surface of a central hole 8c of the case 8. The metallic terminals 4a and 4b extend to the exterior via the central hole 8c and the through-hole 7a of the tabular member 7. The piezoelectric element 3 is not limited to be disc-shaped, and can be elliptic or rectangular.

In this example, the central hole 8c of the case 8 has an elliptical shape with a bottom. Since the outside shape of the case 8 is cylindrical, a sidewall portion (inner supporter) 8b of the case 8 includes thick portions 8b₁ and thin portions 8b₂. A flat portion 8d is formed at the end face of the sidewall portion 8b of the case 8, and the tabular member 7 whose outer diameter is substantially the same as that of the case 8 is disposed on the flat portion 8d so as to face the flat portion with the filler 6 interposed therebetween. In this example, the areas of the case and the tabular member 7 facing each other can be ensured due to the thick portions 8b₁.

In this example, the case 8 is formed of the outer case and the inner case integrated with each other, and is susceptible to reverberation since the entire case is composed of a material with a low acoustic impedance. However, when the sidewall portion 8b of the integrated case 8 vibrates, relative deformation occurs between the flat portion and the tabular member 7 due to the filler 6 interposed between the flat portion 8d formed on the rear surface of the integrated case 8 and the tabular member 7, and causes shear deformation in the filler 6 interposed therebetween. In this manner, the viscoelastic damping effect can be obtained, and the application of the present invention appears to be effective. Moreover, the integration of the outer case and the inner case can advantageously reduce the production cost.

### EXAMPLE 8

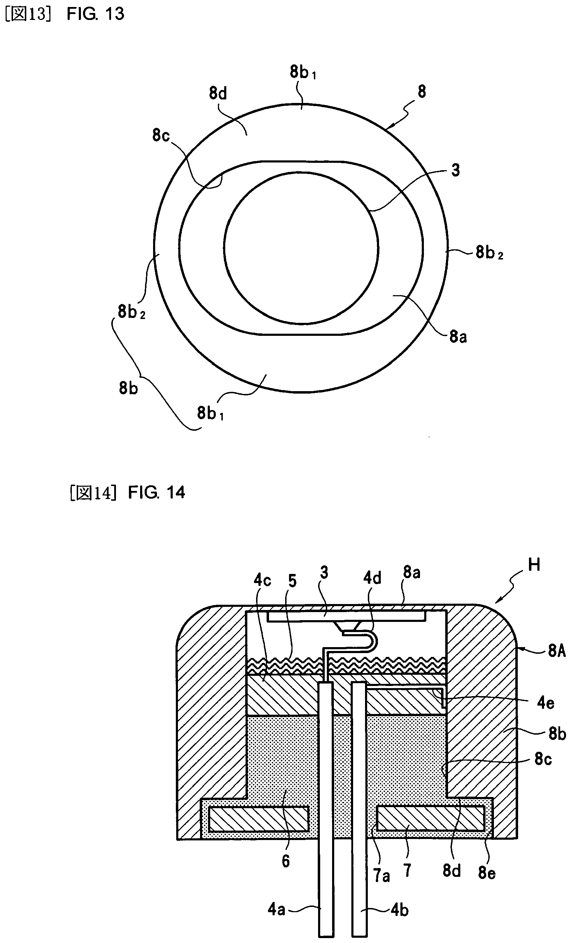

Fig. 14 illustrates an ultrasonic sensor of Example 8 according to an embodiment of the present invention. The same reference numbers are used for components common to those in Example 7, and the duplicated descriptions will be omitted. An ultrasonic sensor H of this example also includes an integrated case 8A formed of an outer case and an inner case composed of the same material integrated together. The ultrasonic sensor H differs from the ultrasonic sensor G of Example 7 in that a recessed portion 8e is formed in the integrated case 8A at a position adjacent to the rear side and the tabular member 7 is accommodated inside the recessed portion 8e. The tabular member 7 is covered with the filler 6. When the integrated case 8A vibrates, relative deformation occurs between the flat portion and the tabular member 7 due to the filler 6 interposed between the flat portion 8d serving as the bottom surface of the recessed portion 8e and the tabular member 7, and causes shear deformation in the filler 6 interposed therebetween. In this manner, the viscoelastic damping effect can be obtained. Also in this case, the case 8A having the integrated structure can advantageously reduce the production cost.

In the above-described examples, the inner case is ring-shaped or cylindrical, and the tabular member is disc-shaped. However, the case can have a rectangular tube shape, and the tabular member can have a rectangular plate shape. The flat portion formed in the inner case (inner supporter) does not necessarily have a smooth surface, and can have an uneven surface. Similarly, the surface of the tabular member is not necessarily smooth, and can be uneven. Moreover, the flat portion is not necessarily parallel to the bottom portion serving as the vibrating surface, and can be, for example, inclined with respect to the bottom portion or curved as long as the flat portion can cause shear deformation in the filler when the inner supporter vibrates. In this case, it is preferable that the surface of the tabular member facing the flat portion is substantially parallel to the flat portion, that is, the thickness of the filler interposed between the flat portion and the tabular member is substantially uniform. Furthermore, the central hole and the flat portion are not necessarily disposed in series, and can be separated from each other. In this case, the type of the filler disposed inside the central hole and that of the filler disposed on the flat portion can be different. Although a ring-shaped flat plate is used as the tabular member, a flat plate without a hole can also be used. The tabular member can have any shapes, for example, a cap shape that covers the inner case at a position adjacent to the rear side. Moreover, a plurality of tabular members can be stacked. Furthermore, the thickness of the tabular member is not necessarily uniform.

### Brief Description of Drawings

[Fig. 1] Fig. 1 is a cross-sectional view of an ultrasonic sensor of Example 1 according to an embodiment of the present invention.
[Fig. 2] Fig. 2 is an exploded perspective view of a body of the ultrasonic sensor and a tabular member shown in Fig. 1.
[Fig. 3] Fig. 3 is a bottom view illustrating side vibrations of an inner case (inner supporter) shown in Fig. 1.
[Fig. 4] Figs. 4(a) and 4(b) illustrate the reverberation characteristic of the ultrasonic sensor of Example 1 and that of an ultrasonic sensor of Comparative Example, respectively, for comparison.
[Fig. 5] Figs. 5(a) and 5(b) are a table and a diagram, respectively, illustrating the relationship between the thickness of the tabular member and the reverberation tail.
[Fig. 6] Fig. 6 is a cross-sectional view of an ultrasonic sensor of Example 2 according to an embodiment of the present invention.
[Fig. 7] Fig. 7 is a cross-sectional view of an ultrasonic sensor of Example 3 according to an embodiment of the present invention.
[Fig. 8] Fig. 8 is a cross-sectional view of an ultrasonic sensor of Example 4 according to an embodiment of the present invention.
[Fig. 9] Fig. 9 is a cross-sectional view of an ultrasonic sensor of Example 5 according to an embodiment of the present invention.
[Fig. 10] Fig. 10 is a cross-sectional view of an ultrasonic sensor of Example 6 according to an embodiment of the present invention.
[Fig. 11] Fig. 11 is a cross-sectional view of an ultrasonic sensor of Example 7 according to an embodiment of the present invention.
[Fig. 12] Fig. 12 is a perspective view of a case of the ultrasonic sensor and a tabular member shown in Fig. 11.
[Fig. 13] Fig. 13 is a rear view of the case of the ultrasonic sensor shown in Fig. 11 without the tabular member.
[Fig. 14] Fig. 14 is a cross-sectional view of an ultrasonic sensor of Example 8 according to an embodiment of the present invention.
[Fig. 15] Fig. 15 is a cross-sectional view of an ultrasonic sensor with a known structure.
[Fig. 16] Fig. 16 is a cross-sectional view of the ultrasonic sensor of Comparative Example.

### Reference Numerals

A to F ultrasonic sensors
1 outer case
1a bottom portion (vibrating surface)
2, 2A, 2B, 2C, 2D, and 2E inner cases (inner supporters)
2a recessed portion (adjacent to front side)
2b central hole
2c recessed portion (adjacent to rear side)
2d flat portion
3 piezoelectric element
4a and 4b metallic terminals
5 sound wave absorber
6 filler
7 tabular member
7a through-hole
8 and 8A cases
8a bottom portion
8c central hole
8d flat portion

## Claims

1. An ultrasonic sensor including a cylindrical case (10) with a bottom (1a) and a piezoelectric element (3) fixed to the inner side of the bottom portion, the bottom portion constituting a vibrating surface, the ultrasonic sensor comprising:
a ring-shaped inner supporter (2) disposed inside the sidewall portion of the case (10), having a central hole (2b) extending in the axial direction at the central portion of the supporter, and having a flat portion (2d) around the central hole (2b);
a viscoelastic filler (6) disposed inside the central hole (2b) and on the flat portion (2d) of the inner supporter; **characterized in that** the ultrasonic transducer further comprises:
a tabular member (7) having a rigidity higher than the rigidity of the filler (6) and disposed on the flat portion (2d) of the inner supporter so as to face the flat portion (2d) with the filler (6) interposed therebetween; and
a through-hole (7a) corresponding to the central hole (2b) of the inner support, the through-hole (7a) being formed in the central portion of the tabular member (7).

2. The ultrasonic sensor according to Claim 1, wherein the flat portion (2d) is a surface parallel to the bottom portion of the case (10).

3. The ultrasonic sensor according to Claim 1 or 2, wherein the case (10) is formed of a cylindrical outer case (1) with a bottom and an inner case (2) joined and fixed inside the outer case (1), wherein the inner case (2) is the inner supporter.

4. The ultrasonic sensor according to Claim 3, wherein the inner case (2) is composed of a metallic material with a density higher than the density of the outer case (1).

5. The ultrasonic sensor according to any one of Claims 1 to 4, wherein a recessed portion (2c) is formed in an end of the inner supporter opposite to the end adjacent to the piezoelectric element (3), the flat portion (2d) is formed at the bottom surface of the recessed portion (2c), and the tabular member (7) is accommodated in the recessed portion (2c).

6. The ultrasonic sensor according to any one of Claims 1 to 4, wherein only the flat portion (2d) is formed at an end of the inner supporter opposite to the end adjacent to the piezoelectric element (3), and the shape of the outer periphery of the tabular member (7) is substantially the same as the outer periphery of the inner supporter.

7. The ultrasonic sensor according to any one of Claims 1 to 6, wherein a connecting terminal (4) connected to the piezoelectric element (3) extends to the exterior through the central hole (2b) of the inner supporter and the through-hole (7a) of the tabular member (7) in a noncontact manner.

8. The ultrasonic sensor according to any one of Claims 1 and 2, and 5 to 7, wherein the inner side of the sidewall portion of the case is the inner supporter.

## Patentansprüche

1. Ultraschallsensor mit einem zylindrischen Gehäuse (10) mit einem Boden (1a) und einem an der Innenseite des Bodenabschnitts befestigten piezoelektrischen Element (3), wobei der Bodenabschnitt eine vibrierende Fläche bildet, wobei der Ultraschallsensor Folgendes umfasst:
einen ringförmigen inneren Träger (2), der innerhalb des Seitenwandabschnitts des Gehäuses (10) angeordnet ist, mit einem zentralen Loch (2b), das sich in axialer Richtung am zentralen Abschnitt des Trägers erstreckt und einen flachen Abschnitt (2d) um das zentrale Loch (2b) herum hat;
einen viskoelastischen Füllstoff (6), der in dem zentralen Loch (2b) und am flachen Abschnitt (2d) des inneren Trägers angeordnet ist;
**dadurch gekennzeichnet, dass** der Ultraschallwandler ferner Folgendes umfasst:
ein tafelförmiges Element (7), das eine Steifigkeit hat, die höher ist als die Steifigkeit des Füllstoffs (6), und am flachen Abschnitt (2d) des inneren Trägers angeordnet ist, so dass es dem flachen Abschnitt (2d) mit dem Füllstoff (6) dazwischen eingefügt zugewandt ist; und
ein Durchgangsloch (7a) entsprechend dem zentralen Loch (2b) des inneren Trägers, wobei das Durchgangsloch (7a) im zentralen Abschnitt des tafelförmigen Elements (7) ausgebildet ist.

2. Ultraschallsensor nach Anspruch 1, wobei der flache Abschnitt (2d) eine Oberfläche parallel zum Bodenabschnitt des Gehäuses (10) ist.

3. Ultraschallsensor nach Anspruch 1 oder 2, wobei das Gehäuse (10) aus einem zylindrischen Außengehäuse (1) mit einem Boden und einem Innengehäuse (2) gebildet ist, das innerhalb des Außengehäuses (1) angefügt und befestigt ist, wobei das Innengehäuse (2) der innere Träger ist.

4. Ultraschallsensor nach Anspruch 3, wobei das Innengehäuse (2) aus einem metallischen Material mit einer Dichte gebildet ist, die höher ist als die Dichte des Außengehäuses (1).

5. Ultraschallsensor nach einem der Ansprüche 1 bis 4, wobei ein ausgesparter Abschnitt (2c) in einem Ende des inneren Trägers gegenüber dem Ende neben dem piezoelektrischen Element (3) ausgebildet ist, wobei der flache Abschnitt (2d) an der Bodenfläche des ausgesparten Abschnitts (2c) ausgebildet und das tafelförmige Element (7) in dem ausgesparten Abschnitt (2c) aufgenommen ist.

6. Ultraschallsensor nach einem der Ansprüche 1 bis 4, wobei nur der flache Abschnitt (2d) an einem Ende des inneren Trägers gegenüber dem Ende neben dem piezoelektrischen Element (3) ausgebildet ist und die Form der Außenperipherie des tafelförmigen Elements (7) im Wesentlichen der der Außenperipherie des inneren Trägers entspricht.

7. Ultraschallsensor nach einem der Ansprüche 1 bis 6, wobei ein mit dem piezoelektrischen Element (3) verbundener Verbindungsanschluss (4) durch das zentrale Loch (2b) des inneren Trägers und durch das Durchgangsloch (7a) des tafelförmigen Elements (7) kontaktlos zur Außenseite verläuft.

8. Ultraschallsensor nach einem der Ansprüche 1 und 2 sowie 5 bis 7, wobei die Innenseite des Seitenwandabschnitts des Gehäuses der innere Träger ist.

## Revendications

1. Capteur à ultrasons comprenant un boîtier cylindrique (10) avec un fond (1a) et un élément piézoélectrique (3) fixé au côté intérieur de la partie de fond, la partie de fond constituant une surface vibrante, le capteur à ultrasons comprenant :
un support intérieur en forme d'anneau (2) disposé à l'intérieur de la partie de paroi latérale du boîtier (10), ayant un trou central (2b) s'étendant dans la direction axiale à la partie centrale du support, et ayant une partie plate (2d) autour du trou central (2b) ;
une matière de remplissage viscoélastique (6) disposée à l'intérieur du trou central (2b) et sur la partie plate (2d) du support intérieur ;
**caractérisé en ce que** le transducteur à ultrasons comprend en outre :
un membre tabulaire (7) ayant une rigidité plus élevée que la rigidité de la matière de remplissage (6) et disposé sur la partie plate (2d) du support intérieur de manière à faire face à la partie plate (2d) avec la matière de remplissage (6) interposée entre les deux ; et
un trou traversant (7a) correspondant au trou central (2b) du support intérieur, le trou traversant (7a) étant formé dans la partie centrale du membre tabulaire (7).

2. Capteur à ultrasons selon la revendication 1, dans lequel la partie plate (2d) est une surface parallèle à la partie de fond du boîtier (10).

3. Capteur à ultrasons selon la revendication 1 ou 2, dans lequel le boîtier (10) est formé d'un boîtier extérieur cylindrique (1) avec un fond et un boîtier intérieur (2) joint et fixé à l'intérieur du boîtier extérieur (1), dans lequel le boîtier intérieur (2) est le support intérieur.

4. Capteur à ultrasons selon la revendication 3, dans lequel le boîtier intérieur (2) est composé d'un matériau métallique ayant une densité plus élevée que la densité du boîtier extérieur (1).

5. Capteur à ultrasons selon l'une quelconque des revendications 1 à 4, dans lequel une partie évidée (2c) est formée dans une extrémité du support intérieur opposée à l'extrémité adjacente à l'élément piézoélectrique (3), la partie plate (2d) est formée au niveau de la surface inférieure de la partie évidée (2c), et le membre tabulaire (7) est logé dans la partie évidée (2c).

6. Capteur à ultrasons selon l'une quelconque des revendications 1 à 4, dans lequel seule la partie plate (2d) est formée à une extrémité du support intérieur opposée à l'extrémité adjacente à l'élément piézoélectrique (3), et la forme de la périphérie extérieure de l'élément tabulaire (7) est sensiblement la même que la périphérie extérieure du support intérieur.

7. Capteur à ultrasons selon l'une quelconque des revendications 1 à 6, dans lequel une cosse de connexion (4) connectée à l'élément piézoélectrique (3) s'étend à l'extérieur à travers le trou central (2b) du support intérieur et le trou traversant (7a) du membre tabulaire (7) d'une manière sans contact.

8. Capteur à ultrasons selon l'une quelconque des revendications 1 et 2, et 5 à 7, dans lequel le côté intérieur de la partie de paroi latérale du boîtier est le support intérieur.
